# EUROPEAN PATENT APPLICATION

(11) **EP 0 652 393 A1**
(43) Date of publication of application: **10.05.1995**
(21) Application number: 94116480.8
(22) Date of filing: 19.10.1994
(51) Int. Cl.: F16K 17/00, F22B 1/28

(54) **Dual function safety valve**

(30) Priority: 25.10.1993 IT MI932253
(71) Applicant: C.E.M.E. S.p.A., I-20061 Carugate (Milano) (IT)
(72) Inventor: Miotti, Renzo, I-20061 Carugate (Milan) (IT)
(74) Representative: Lecce, Giovanni

(57) **Abstract**

A filling cap (1) has a safety system consisting of a stem valve (9) with pressure sealing seat (11) and calibrated counter-spring (12) and a bimetallic body (14) or an expanding-fluid capsule and combined with a means of release (18) of the gripping cap (21) of said cap. Said bimetallic device or cap are sensitive to and operate on the release means on the basis of temperature.

## Description

The present invention relates to a dual function safety valve applicable preferably but non in a limiting manner to filling caps for boilers or the like and in particular to domestic or industrial boilers for ironing machines.

Said valve comprises a first stem engaging with the corresponding seat by means of the mechanical pressure exerted by a calibrated counter-spring. Said stem is virtually of the conventional type and engages its seat and forms a seal thereon up to a predetermined safety pressure beyond which there occurs opening of the overload valve on the spring. In coaxial combination or not with said stem is prearranged a bimetallic body or an expanding-fluid capsule sensitive to and deformable on the basis of the temperature. Said body or cap, prescinding from the presence of pressure inside the boiler or the like and with temperature higher than a predetermined safety level, deforms and causes detachment of connection and disconnection means between an idly rotating part and the actual cap screwed onto the body under pressure.

Detachment of the connection means prevents unscrewing of the cap even after release of the pressure if the temperature in the assembly is high.

It is known that due to functional exigencies and the need for safety all pressurised bodies must be equipped with devices designed to prevent the formation of dangerous overpressure and ensure the safety of operators.

Such devices are technically necessary and legally required to ensure safety and at present consist of automatic valves which by means of simple mechanical or electromechanical systems or even electronic systems with sensors are adjustable in accordance with levels predetermined on the basis of working pressure levels and applications and intervene by discharging excess pressure into the atmosphere.

Said safety valves are used in industrial and/or domestic systems on boilers, pots, steam irons and so forth.

The most elementary of such valves comprise virtually a stem remaining engaged in the corresponding seat under the effect of a counter-spring whose pressure strength is calibrated at the maximum pressure admissible in the body.

In other solutions the safety valves consist of bimetallic membranes or expanding-fluid capsules which deform and expand to open the seats with which they are coupled upon reaching the tolerated limit pressure.

Said safety devices, although valid from the functional viewpoint in relation to pure pressure, exhibit some limitations when the pressures in play are related to fluids subject even to considerable temperature variations.

In this case it is true that the discharged pressure recreates safe conditions but is also true that if the temperature is high it remains so and therewith the danger of burns for the users persists.

Said situation appears in particular systems such as e.g. steam ironing ones, whether industrial or domestic.

This is because, in addition to the need to avoid overpressure in the steam production boilers, there is the need to top up the water level when all the generated steam has been used for ironing.

Upon filling the bolder with water it is possible to discharge the pressure to the point where it is possible to unscrew the filling cap but at the time it is also very probable that the internal temperature will still be sufficiently high to cause instant evaporation of the first filling water poured. This means that from the filling hole there can be discharged to the exterior a sudden flow of superheated steam which could strike and burn the operators assigned to filling.

The purpose of the present invention is to overcome the above shortcomings. The present invention solves the problem by means of a dual function safety valve by means of which there are achieved the following results: with the filling cap of any body subject to pressure is combined a first safety valve whose intervention is a function of and proportional to the highest pressure level reached or set for the operating fluid and a second device whose intervention is a function of and proportional to the maximum temperature level reached or set for said fluid. The pressure safety valve is virtually made up of a seat in which the stem is kept in closed position by a counter-spring with calibrated load corresponding to the maximum pressure of the operating fluid. The temperature control device is virtually made up of bimetallic lamination means and/or expanding-fluid capsules sized and calibrated on the basis of the maximum and/or minimum temperature of the fluid. The bimetallic laminations and/or expanding-fluid capsules are combined and operated by connecting with and releasing engagement and disengagement means of the filling cap. The two safety devices are combined with coaxial or independent configurations in the same body or in separate positions.

The advantages of the present invention consist essentially of the fact that the device has two distinct functions in relation to the intrinsic safety of the members subject to pressure under the effect of any fluid and in particular under the effect of steam under pressure generated in boilers used in the domestic and/or industrial fields for ironing systems and the like. The dual safety function is related to the effect of pressure only, ensuring discharge to the atmosphere of the excess by means of calibration and to the effect of temperature, setting limits above which no user can unscrew the filling cap.

Additional advantages consist of the fact that said devices can be provided in a simple, economical manner and with ensured operation directly and preferably on the filling caps of the boilers or the like or even on the adjacent structures.

The present invention is described and illustrated in greater detail below in accordance with a preferred but non-limiting embodiment with reference to the annexed drawings in which -
FIG. 1 shows a cross section of a first embodiment of a boiler cap equipped with a dual safety device, and
FIG. 2 shows a cross section of a second embodiment of said device.
FIG. 3 shows a cross section of a third embodiment of the filler cap with re-setting push-button.

The figures show dual-function safety valves arranged in filling caps 1 applied in accordance with the conventional and necessary configuration with screw 2 and seal 3 to bodies under pressure 4 such as e.g. boilers for ironing systems and the like.

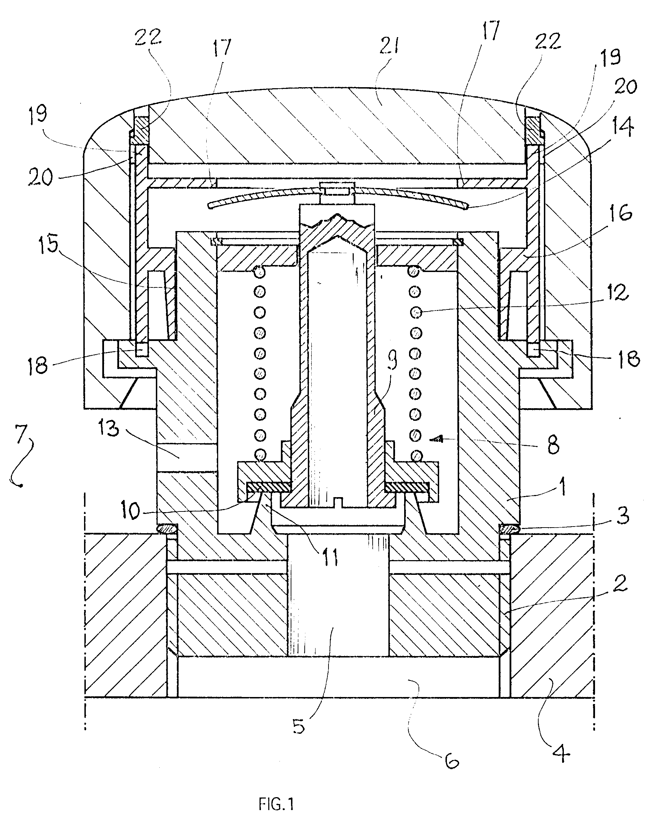

In a first embodiment (FIG. 1) the cap 1 is equipped with a central duct 5 having the function of placing in communication the interior 6 of the pressurised body 4 with the atmosphere 7. Said communication is normally intercepted by a safety valve 8 virtually consisting of a stem 9 equipped with a gasket 10 which provides a seal on the seat 11 of the central duct 5.

The seal is assured by the load on a counter-spring 12 which holds said gasket 10 pressed on said seat 11. Said seal is assured up to the overpressure limit tolerated inside the pressurised body 4 corresponding to the maximum calibrated load supported by the counter-spring 12. After reaching and/or exceeding the predetermined overpressure, the counter-spring 12 yields, the gasket 10 detaches from the seat 11 and the pressurised fluid in the body 4 discharged into the atmosphere through the port 13 in the cap 1.

In combination with the aforesaid safety device in relation to the possible overpressure, on the stem 9 is pivoted a bimetallic element 14 which deforms in the presence of temperature.

After reaching and/or exceeding a predetermined temperature the free ends or the outer edge of the bimetallic element 14 engage with the edges 17 of an intermediate body 16 running on the cap 1 along a surface 15 and is equipped with serrations 18 which under normal temperature conditions engage in as many corresponding serrations present on the cap and exhibits upper extensions 19 engaging in as many seats 20 present on an external gripping cap 21 fitted over said cap.

Deformation of the bimetallic element 14 is such as to raise the intermediate body 16 and push it upward until it causes release of said serrations 18 and raising of the upper extensions 19.

Under these conditions the external gripping cap 21 is disengaged completely from the cap 1 so that even when rotated on itself unscrewing of the cap is impossible.

Unscrewing of the cap 1 is thus prevented both in case of overpressure or in the case where the temperatures present inside are excessive and dangerous for the operators.

Over the upper extensions 19 there can be running means 22 which during critical conditions are pushed and made to protrude outside the upper surface of the external gripping cap 21 and used as visual indicators of conditions unsuitable for opening of the cap.

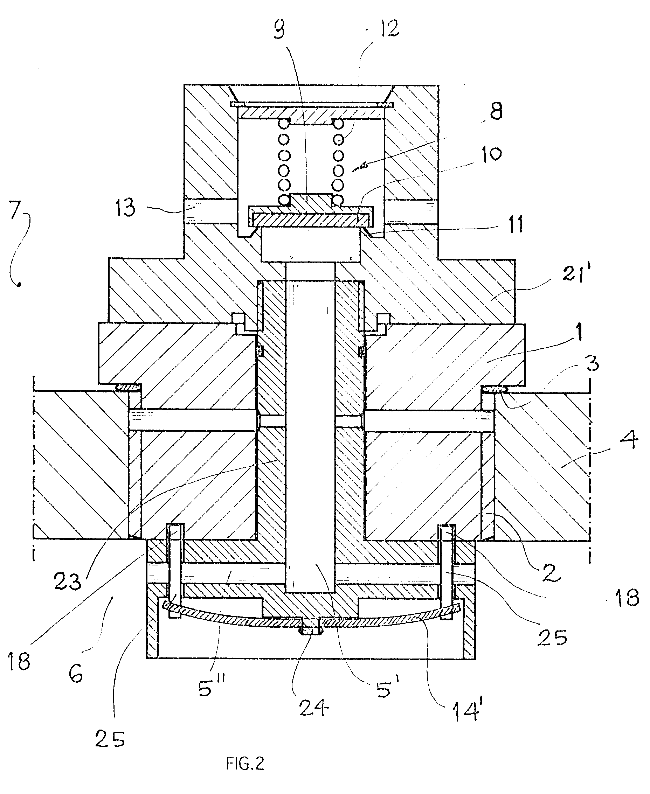

In a second embodiment (FIG. 2) the two safety functions are distinct from each other and arranged differently. The pressure safety valve 8 with stem 9, gasket 10, seat 11 and counter-spring 12 are located in the upper cap 21' which engages with the cap below through an intermediate body 23 in which are made the ducts 5' and 5'' for connection between the interior 6 of the pressurised body 4 and the exterior 7 through the port 13.

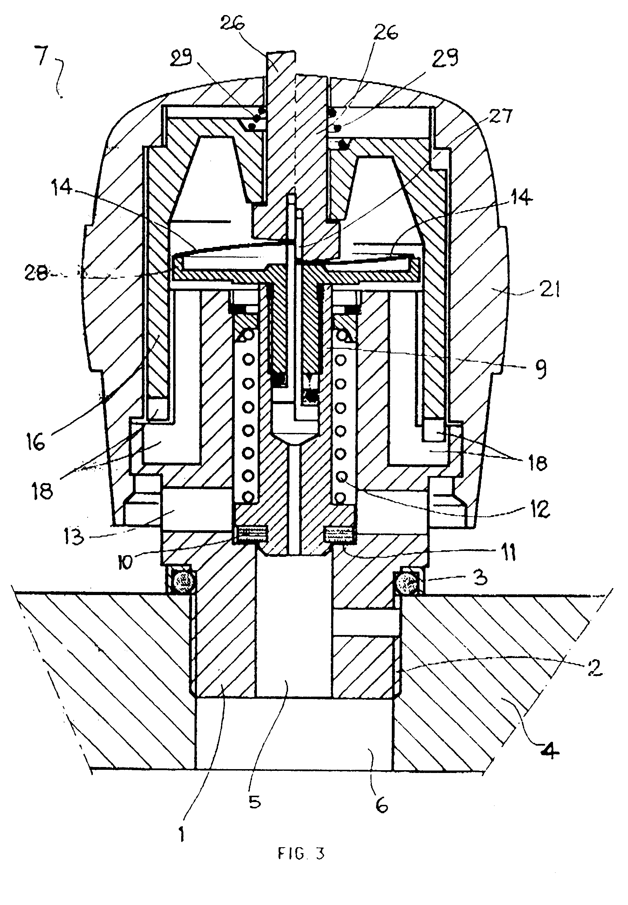

A third embodiment (FIG. 3) provides for the adoption of a re-setting push-button (26) illustrated in the two positions: raised to the left and pressed to the right. The operational configuration of the valve is almost identical to the solution previously discussed and described.

The bimetallic body (14) is engaged on a shaft (27) which runs in the central support of a cap (28) against which the bimetallic body operates when in action.

Under safe conditions, i.e. when the cap (1) cannot be removed (left side of figure) the counter-spring (12) closes the seat (11) while the bimetallic body (14) pushes up the push-button (26) which, in turn, raises the intermediate body (16) to disengage the teeth (18) from the corresponding serrations present on the body of the cap (1).

In this condition the gripping cap (21), although it can rotate, remains engaged with the cap (1) through the striker (27) but does not allow unscrewing thereof. The spring (29) is compressed.

The impossibility of opening the cap (1) persists as long as the bimetallic body (14) turns in the above said direction.

When the temperature diminishes and the bimetallic body (14) resumes its convex configuration (right side of FIG. 3) the spring (29) discharges and pushes down the intermediate body (16) causing engagement of the serrations (18) with the complementary serrations present on the cap (1) so that the intermediate body (16), which is engaged coaxially with the possibility of running with the gripping cap (21), couples with the cap (1) and is arranged to allow unscrewing thereof. The push-button (26) has the function of allowing advance resetting of the device as set forth above by acting on the bimetallic body (14) to advance its response times, which, during natural cooling, is rather long. When the temperature in the boiler is sufficiently reduced and falls within safe limits, it suffices to press the push-button (26) to cause earlier return of the bimetallic body to its convex configuration.

Pressing the push-button (26) cause lowering of the intermediate body (16), coupling of the serrations (18) and engagement of the above parts (1), (16) and (21).

If the temperature in the boiler is too high and over safety levels, the push-button (26), even if pressed, rises instantaneously, deactivating the coupling and preventing opening of the cap.

The intermediate body 23 is constrained to the upper cap 21' and rotates idly in the cap 1. The lower end 24 constitutes the constraint for a bimetallic body 14' with which are engaged extensions 25 equipped with serrations 18 which engage in as many teeth present on the lower surface of the cap 1.

With high temperatures equal to or greater than the calibrated temperatures the bimetallic body 14' deforms in such a manner as to disengage the serrations 18 of the extensions 25 and the cap 1. In this case, any rotation produced on the upper cap 21' does not allow unscrewing of the cap 1.

In other solutions the two devices can even be arranged in different manners, e.g. the bimetallic element can be separate from the assembly made up of the pressure safety valve and the cap if operating by means of levers or the like on the release of the rotating part of said cap. Basically the temperature-operated safety element, instead of being located on the filling cap, can be located even on a wall of the boiler and operate upon release of the cap serrations by means of appropriate interposed linkages.

As an alternative, in all the configurations, in place of the bimetallic means there can be used expanding-fluid capsules whose behaviour is analogous.

While the present invention has been described and explained with reference to particular non-limiting embodiments it will be appreciated by those skilled in the art that various modifications to the structures and details may be made without departing from the spirit and scope of the invention as set forth in the claims.

Lastly, it is intended that optional structural reversals or alternative locations of the components which make up the whole valve which is the object of the present invention are possible.

## Claims

1. Dual function safety valve characterised in that it consist of two independent devices with one operating on the basis of pressure and its changes and the other operating on the basis of temperature and its changes.

2. Dual function safety valve characterised in that the stem (9) with gasket (10) which engages with pressure seal on a seat (11) by means of a counter-spring (12) is combined with a bimetallic element (14) or an expanding-fluid capsule with controlled heat deformation engaging with engagement and/or disengagement means (18) included between closing caps (4) and external gripping caps (21).

3. Safety valve in accordance with claims 1 and 2 characterised in that the stem (9) of the pressure control device (8) engages coaxially with a bimetallic element (14) or an expanding-fluid capsule sensitive to temperature changes and said bimetallic element or capsule being combined by engagement on the basis of their heat deformation with an intermediate body (16) sliding (15) along the cap (1) and having serrations (18) mating with as many corresponding serrations of the cap (1) and having upper extensions (19) engaging in as many seats (20) present on the sliding upper cap (21).

4. Safety valve in accordance with claims 1 to 3 characterised in that the bimetallic element (14) or the expanding-fluid capsule constrained to the stem (9) of the pressure control device (8) are sensitive to heat deformation in combination or not with movements caused by pressure and its variations.

5. Safety valve in accordance with claims 1 to 4 characterised in that the counter-spring of the pressure safety device (8) and the bimetallic element (14) or the expanding-fluid capsule of the temperature safety device are dimensioned on the basis of the calibrated overpressure and temperature limits.

6. Safety valve in accordance with claims 1 to 5 characterised in that the cap (1) is combined with an external gripping cap (21), (21') by means of couplings of serrations (18) which under normal conditions remain engaged with each other and, under high temperature conditions, disengage under the detaching effect exerted by said bimetallic element (14) or expanding-fluid capsule.

7. Safety valve in accordance with claims 1 to 6 characterised in that it comprises a resetting push-button (26) engaged with said bimetallic body (14) in a direct coupling relationship and in relation to the disengagement or engagement of the release or engagement means (18) included between the closing cap (1) and the gripping cap (21) depending on the temperature in the boiler (4).

8. Safety valve in accordance with claims 1 to 6 characterised in that the pressure control system (8) and temperature control system (14) are included coaxially or not in, or are separated from, the filling cap (1).

9. Dual function safety valve in accordance with the above claims as described with particular reference to the reservation expressed in the last two sentences of the descriptive part and illustrated by way of example and for the specified purposes.
